# EUROPEAN PATENT APPLICATION

(11) **EP 3 670 421 A1**
(43) Date of publication of application: **24.06.2020**
(21) Application number: 18213850.3
(22) Date of filing: 19.12.2018
(51) Int. Cl.: B66C 1/10, B66C 1/68, F03D 1/06, B66C 1/42, B66C 1/66, B66C 13/08

(54) **ATTACHMENT TOOL FOR CONNECTING A CRANE HOOK TO A WIND TURBINE BLADE, ATTACHMENT ARRANGEMENT AND METHOD FOR LIFTING A WIND TURBINE BLADE**

(71) Applicant: Siemens Gamesa Renewable Energy A/S, 7330 Brande (DK)
(72) Inventor: WEISS, Christopher, 22395 Hamburg (DE)
(74) Representative: Aspacher, Karl-Georg

(57) **Abstract**

Attachment tool for connecting a crane hook (8) to a wind turbine blade (3), comprising a main portion (11), wherein the main portion (11) comprises a lower portion (15) with a first fixation means (20) fixable to a root-side end portion (10) of the blade (3) so that the main portion (11) protrudes to the side of the blade (3), wherein an attachment portion (12) is attached to an upper portion (16) of the main portion (11), wherein a first end (24) of a boom (23) is attached to the attachment portion (12), so that the boom (23) is protruding from the main portion (11) in an angle smaller than 180°, wherein at least one second fixation means (26) is attached to the attachment portion (12) and/or a second end (25) of the boom (23) opposite the attachment portion (12), wherein a weight element (27) is attached to the attachment portion (12) or to the second end (25) of the boom (23).

## Description

The invention relates to an attachment tool for connecting a crane hook to a wind turbine blade. Furthermore, the invention relates to an attachment arrangement and to a method for lifting a wind turbine blade.

The on-site assembly of wind turbine blades comprises steps of lifting the wind turbine blades on top of the wind turbine tower. Normally, the wind turbine blades are mounted to the hub on the ground, wherein afterwards the hub and the blades are lifted simultaneously to the top of the tower of the wind turbine. Therefore, special sockets for enabling a fixation of the wind turbine blades to the hub are used. Alternatively, the blades can be lifted towards a hub, which has previously been arranged on top of the tower, wherein a wind turbine blade is lifted towards the lowest position, or 6-o'clock position, respectively, of the hub using a crane. Afterwards, the remaining two blades can be lifted towards the 10-o'clock position and the 2-o'clock position completing the rotor. Alternatively, each blade is oriented horizontally and attached to the hub in a 3-o'clock position, or 9-o'clock position, respectively, wherein after attachment of one blade, the hub is rotated prior to the fixation of the next blade.

However, these mounting procedures are tedious and require special equipment including a socket for mounting the blades to the hub or a crane with a height higher than the tower of the wind turbine, in particular when the blades are lifted in the 2-o'clock position or the 10-o'clock position.

It is therefore an object of the invention to provide an attachment tool for connecting a crane hook to a wind turbine blade which facilitates the mounting procedure of the blade during the assembly of the wind turbine.

According to the invention, this object is achieved by an attachment tool as initially described, which comprises a main portion, wherein the main portion comprises a lower portion with a first fixation means fixable to a root-side end portion of the blade so that the main portion protrudes to the side of the blade, wherein an attachment portion is attached to an upper portion of the main portion, wherein a first end of a boom is attached to the attachment portion, so that the boom is protruding from the main portion in an angle smaller than 180°, wherein at least one second fixation means is attached to the attachment portion and/or a second end of the boom opposite the attachment portion, wherein a weight element is attached to the attachment portion or to the second end of the boom.

The attachment tool can be attached to the blade using the first fixation means. The first fixation means is connected to a root-side end of the blade, wherein the root-side end designates the end of the blade, which is opposite to the tip-side end and hence the end of the blade which is connectable to the hub of the wind turbine. The blade is attached to the hub for instance by a flange mounted on the root-side end. The fixation of the attachment tool to the root-side end portion of the wind turbine blade has the advantage that the geometry of the root-side end of different wind turbine blades is equal for different types of wind turbine blades, since normally the same type of hub, or of a connecting flange to the hub, respectively, is used. Therefore, the same attachment tool can be used for different types of blades that differ in their geometry and/or their features between the root-side end portion and the tip of the blades. Advantageously, an attachment of the attachment tool to the blade is possible independently of geometrical sizes like length, diameter or the shape of the cross-sectional profile of the blade. Additionally, the fixation of the attachment tool to the blade is independent of further features of the blade like for instance the presence of an edge protection, a weight distribution and/or the location of a center of gravity of the blade, respectively.

The first fixation means of the attachment tool is attached to a lower portion of the main portion of the attachment tool, wherein the main portion protrudes to the side of the blade in a mounted state of the attachment tool. On the upper portion of the main portion, the attachment portion is attached to the main portion. The main portion can be for instance a main plate or a main frame. Also the attachment portion can be realized as an attachment plate or an attachment frame.

Using the attachment portion, the boom of the attachment tool can be attached to the main portion so that the boom is protruding from the main portion in an angle smaller than 180°. Additionally, a weight element is attached to the attachment portion opposing the boom or to the second end of the boom opposing the first end of the boom, which is attached to the attachment portion. Furthermore, at least one second fixation means is attached to the attachment portion and/or the second end of the boom, wherein the second fixation means can be attached to the crane hook.

The boom protruding from the main portion under an angle smaller than 180° forms a lever in between the second fixation means or the weight and the root-side end of the blade. By connecting the second end of the boom to the weight element and/or via the second fixation means to the crane hook, the center of gravity of an arrangement comprising a wind turbine blade attached to the attachment tool is significantly different from the center of gravity of the blade alone. This change in the center of gravity depends on the length of the boom, the mass of the weight element as well as on the position of the weight element and the second fixation means used for the attachment of the crane hook.

The usage of the attachment tool has the advantage that the center of gravity of an arrangement comprising the attachment tool and the blade can be adjusted in such manner that the blade orients itself either towards a 12-o'clock position or towards a 4-o'clock or 8-o'clock position, respectively, once it has been lifted by the crane. This allows mounting the blade easily in either the 12-o'clock position or the 4-o'clock position, or the 8-o'clock position, respectively, on the hub. During lifting, the blade orients itself due to gravity in dependence of the position of the mutual center of gravity of the blade and the attachment tool. The blade can orient in such manner that its root-side end, which comprises in particular a flange for fixation to the hub, is directed towards the hub. Hence for mounting in the 12-o'clock position, the blade orients itself or turns in such manner that the root-side end is pointing downwards so that it can be fixed to the hub. Correspondingly, for the 4-o'clock position and the 8-o'clock position, the blade can orient in such manner that the root-side end is tilted 60° from the perpendicular allowing fixation to the hub in either the 4-o'clock or the 8-o'clock position.

Besides the compatibility for different blade types, the attachment of the attachment tool on the root-side end of the blade has the further advantage that the crane used to lift the blade in the 12-o'clock position must not be significantly higher than the hub of the wind turbine blade, since the attachment position of the crane hook at the attachment tool mounted to the root-side end portion of the wind turbine blade is essentially at the same level as the hub, which in particular allows to use the same crane for mounting of the hub and the wind turbine blade without the need for a crane which height exceeds significantly the height of the hub of the wind turbine.

The crane used for lifting the wind turbine blade can be for instance a mobile crane attached to a vehicle or a vessel stationed in the vicinity of the wind turbine to which the blade shall be lifted. Besides the lifting of the blade onto the tower, the attachment tool can also be used vice versa for lowering a blade from a wind turbine to the ground using the crane. However, for reasons of comprehensibility, it is referred in the following only to a lifting or assembly process, although the attachment tool can be used correspondingly for a lowering or disassembly process as well.

Depending on the position of the weight element and the second fixation means used for attachment of the crane hook, different mounting positions are possible. This allows for attaching the wind turbine blade both in a 12-o'clock position and in a 4-o'clock position, or an 8-o'clock position, respectively depending on the embodiment or the configuration of the attachment tool. The ability to mount a blade in different positions has the advantage that the hub does not have to be turned during the assembly of the rotor, since the blade can be lifted and attached to a hub fixed in a stationary position.

The second fixation means can be a counterpart for the crane hook and can, for instance, be or comprise a loop or the like for connecting the attachment tool to the crane. It is possible that the attachment tool comprises a plurality of second fixation means, wherein a second fixation means is chosen depending on the orientation, which the lifted blade shall occupy during lifting.

The boom can protrude from the main portion in an angle smaller than 180° either in the direction of the tip of the blade or it can protrude from the main portion in the direction of the root-side end of the blade. It is possible that a boom protruding in the direction of the root-side end protrudes beyond the root-side end of the blade.

Preferably, the boom comprises a plurality of boom segments, which are detachably attached to each other, and/or the boom comprises at least one extendable telescope portion. The provision of a plurality of boom segments and/or of at least one extendable telescope portion of the boom allows for adapting the length of the boom and therefore the center of gravity of an arrangement comprising the attachment tool and a blade to which the attachment tool has been attached. The change in the length of the boom causes a different lever between the second fixation means on the second end of the boom or the weight element attached to the second element of the boom, respectively, so that the orientation of a lifted blade can be adapted depending on the blade geometry and depending on the position of the hub to which the blade shall be lifted.

In a preferred embodiment of the invention, the attachment portion is pivotably hinged to the main portion. This has the advantage that the angle between the attachment portion and the main portion can be changed by pivoting the attachment portion or the main portion, respectively. Consequently, also the angle between the boom protruding from the attachment portion and the blade, to which the main portion is attached, can be changed. The changeability of the angle enables a further measure to adjust the center of gravity of an arrangement comprising the attachment tool and the wind turbine blade. After pivoting, the attachment portion and the main portion can be fixed against each other, so that the angle adjusted by pivoting is maintained during lifting of the attachment tool or the blade, respectively.

Preferably, the attachment tool comprises at least one actuator, in particular a hydraulic actuator or a pneumatic actuator or an electrical actuator, wherein the angle between the attachment portion and the main portion is adjustable by actuation of the actuator. The attachment portion and the frame, which are for instance connected by at least one hinge, can be actuated using the actuator so that the angle between the attachment portion and the main portion can be adjusted. Furthermore, for instance by using the hydraulic actuator or a pneumatic actuator or an electrical actuator, a fixation of the attachment portion and the main portion after pivoting can be achieved. The actuator can for instance be controlled by a control unit of the attachment tool or by an external control unit connected to the at least one actuator.

Preferably, the main portion comprises two side struts extending between the lower portion of the main portion to the upper portion of the main portion, wherein the side struts are supported against each other by at least one supporting strut. The side struts can extend from the first fixation means attached to the lower portion of the main portion to the upper portion of the main portion, which is attached to the attachment portion. The side struts of the main portion can protrude from the side of the blade under an angle, for instance under an angle of between 45° and 135°, in particular 90° or essentially 90°. The side struts of the main portion are supported against each other by at least one supporting strut, wherein the at least one supporting strut increases the stability of the main portion and supports each of the side struts against the respective other side strut. The at least one supporting strut can be arranged in between the side struts. It is also possible, that additional supporting struts are provided, which connect the at least one supporting strut to each of the side struts.

In a preferred embodiment of the invention, the attachment tool comprises two actuators, wherein each actuator is attached to a lever strut protruding from the attachment portion. The actuators, which are each for instance a pneumatic actuator, a hydraulic actuator or an electrical actuator, can be attached with one end to the lever strut protruding from the attachment portion and with their respective other end to a side strut and/or a supporting strut of the main portion. By actuation of the actuators, the actuators can for instance expand so that the angle between the attachment portion and the main portion can be adjusted. It is in particular possible, that the attachment portion is pivotably hinged to the main portion, so that by actuation of the actuator due to fixation of the actuator between the side strut of the main portion and the lever strut of the attachment portion, the angle between the attachment portion and the main portion can be adjusted. The two actuators can be fixated in particular on the same side of the attachment portion each to one of the side struts and each to a lever strut protruding from the attachment portion.

Preferably, the lower portion of the main portion comprises an edge adapted to encompass a segment of the circumference, in particular a segment between 90° and 180°, of a root-side end portion of a wind turbine blade. The first attachment portion of the attachment tool can be attached for instance to the edge of the lower portion of the main portion so that an attachment of the fixation means to the wind turbine blade can occur in between a part of or the entire segment of the blade circumference encompassed by the edge. Providing an encompassing of a segment of the circumference between 90° and 180° enables reversibly fitting of the main portion around the root-side end portion of a wind turbine blade, which can have in particular a circular cross section in its root-side end portion. By providing the first fixation means at or around the edge encompassing the segment of the circumference, a stable and secure fixation of the attachment tool to the root-side end portion of the blade can be obtained.

Preferably the first fixation means comprises at least one clamping unit, wherein the clamping unit comprises a curved first portion fixed to the main portion and a curved second portion relatively movable to the first portion between an open position and a closed portion of the clamping unit. The curved first portion can be fixed for instance to the lower portion of the main portion, in particular to an edge, which is adapted to encompass a segment of a circumference of the root-side end portion of the blade. The curved second portion is relatively movable to the first portion and can be moved between an open position, in which the attachment tool can be attached to or removed from the root-side end portion of the blade, and a closed portion, in which the attachment tool is fixed to the blade. By using a first fixation means which comprises at least one clamping unit, a removable attachment of the attachment tool to the wind turbine blade becomes possible. This allows for using the attachment tool for the mounting of a plurality of blades. Furthermore, by the at least one clamping unit, an attachment of the attachment tool to the blade is easily possible and can be conducted without causing any damage to the blade.

In a preferred embodiment of the invention, the second portion is pivotably hinged to the first portion, wherein the first portion and the second portion are adapted to encompass the entire circumference of the root-side end portion of the blade in a closed state of the clamping unit. By pivotably hinging the second portion of the clamping unit to the first portion of the clamping unit, the clamp can be opened or closed, respectively, by pivoting the second portion. It is for instance possible that the second portion is hinged with one end to the first portion, wherein an opposing end of the second portion can be fixed on the opposing end of the first portion in a closed state of the clamp, so that an unintended opening of the clamp can be prevented. By encompassing the entire circumference of the root-side end portion of the blade, a stable and secure fixation of the attachment tool to the blade is enabled. It is in particular possible that the blade tilts slightly inside the closed clamp during lifting, so that the lifted blade can not move relatively to the at least one clamping unit enabling the previously described self-orientation of the arrangement comprising the blade and the attachment tool.

In an alternative embodiment of the invention, the first portion is adapted to encompass a segment of the circumference of the root-side end portion of the blade, wherein the second portion is arranged on the first portion and encompasses the first portion at least partly, wherein the second portion comprises a projection overlapping an edge of the first portion. Thereby, the clamping function of the clamping unit can be obtained in between the projection of the second portion and the edge of the first portion. For instance, a structure protruding from the root-side end portion of the blade can be clamped in between the first portion and the second portion of the clamping unit, so that the blade can be fixed to the attachment tool.

Preferably, the attachment tool is arranged to the blade in such manner that the first portion of the clamping unit abuts smoothly on the outer circumference of the root-side end portion of the blade, so that a large contact area in between the blade and the first portion of the clamping unit is obtained. By providing a large contact area, the occurrence of damage to the blade, for instance induced by a tilting of the blade during lifting, can be prevented. It is in particular possible that the fixation means comprises a plurality of clamping units, wherein each first portion of the clamping unit abuts a different segment of the circumference of the root-side end portion of the blade. The different segments, or the first portions, respectively, can abut each other around the circumference or they can be spaced from each other. Preferably, all segments encompassed by one or more first portions of one or more clamping units of the fixation means encompass between 90° and 180° of the outer circumference of the root-side end portion of the blade. It is possible that additional parts of the wind turbine, which are lifted together with the blade like for instance a blade bearing cover, comprise each one or more recesses for accommodating the at least one clamping unit during lifting.

Preferably, the edge of the first portion and the projection of the second portion each comprise a toothed profile, wherein the toothed profiles encompass a plurality of openings in a closed state of the clamping unit. The openings can be for instance circular openings for accommodating protruding elements in the root-side end portion like bolts attached to the blade. In particular, the openings can be equidistantly spaced, wherein in between the openings contact areas are obtained, in which the toothed profile of the first portion and the toothed profile of the projection abut each other. The toothed profile can also be described as a serrated profile or a dentated profile, respectively. The shape of the openings encompassed by the toothed profiles can have a cross section that matches the cross section of bolts or other fixation means protruding from the root-side end portion of the blade. By grabbing the elements protruding from the root side end portion in between the edge of the first portion and the projection of the second portion of the clamping means, the blade can be fixed to the at least one clamping unit. By using a plurality of clamping units distributed for instance in between 90° or 180° of the circumference of the root-side end of the blade, a stable and secure fixation is obtained. Hence, depending on the length of the protruding elements, an unintended sliding of the blade out of the clamping unit can be prevented.

Preferably, the clamping unit comprises at least one actuator, in particular a hydraulic actuator or a pneumatic actuator or an electrical actuator, to move the second portion between an open position and a closed position of the clamping unit and/or the clamping unit comprises a locking means for locking the clamping unit in a closed position. By the at least one actuator of the clamping unit, the second portion can be moved relatively to the first portion, so that the clamping unit can be opened or closed using the actuator. The at least one actuator can for instance pivot a pivotably hinged second portion relatively to the first portion. It is also possible that by the at least one actuator, a second portion arranged on the first portion is moved relatively to the first portion, so that a protruding element of the wind turbine can be clamped in between the projection of the second portion and the edge of the first portion.

The attachment tool can comprise a locking means for locking the clamping unit in a closed position. The locking means can comprise for instance a bar or a ledge, which locks the clamp in its closed position, so that an unintended opening of the clamp is prevented in case of a malfunction of the actuator like the loss of hydraulic or pneumatic pressure or of an electrical supply, respectively.

In a preferred embodiment of the invention, the clamping unit comprises at least one sensor to detect the current position of the clamping unit. The sensor can for instance be connected to a control unit of the attachment tool or to an external control unit, respectively. By the sensor, the state of a clamping unit can be detected, so that in particular a remote control of the attachment tool is possible and an opening or closing of the clamping unit of a blade already lifted to the hub of the wind turbine blade can be surveilled. In particular, each clamping unit of the fixation means can comprise a sensor, so that the state of all clamping units can be controlled during operation of the attachment tool.

Preferably, the boom is detachably attached to the attachment portion and/or the weight element is detachably attached to the attachment portion or to the boom. By detachably attaching the boom and/or the weight element, a reconfiguration of the attachment tool becomes possible. It allows for instance to configure one attachment tool either for lifting a wind turbine blade in the 12-o'clock position or for lifting a wind turbine blade in the 4-o'clock or the 8-o'clock position, respectively. This has the advantage that for the assembly of a wind turbine rotor, only one attachment tool has to be brought to the construction site reducing the required transport capacity. Furthermore, it is possible that booms of different lengths and/or weights with different masses are used for the attachment tool, so that an adaption of the attachment tool to the geometry and the features of the blades that should be mounted can be obtained. The boom can be attached for instance to the attachment portion to protrude in the direction of the tip of the wind turbine blade or to protrude towards or over the root-side end of the wind turbine blade.

The weight element can be attached to the second end of the boom opposing the attachment portion or to the attachment portion at a side opposing the first end of the boom. The different configurations regarding the position of the weight element and/or of the boom as well as the mass of the weight element and the length of the boom allow for adjusting the center of gravity of an arrangement comprising the attachment tool and a blade. It is also possible that the position of the second fixation means used for attaching the attachment tool to the crane hook can be detachable, so that also one second fixation means can be used, whose position on the attachment tool can be changed during the configuration of the attachment tool.

Preferably, the weight element is a solid body or the weight element is or comprises a container fillable with liquid. The weight element can be a solid body, for instance a concrete weight element as it is used in cranes to establish a counterweight to a lifted object. It is also possible, that the weight element is or comprises a container fillable or filled with a liquid, for instance water, which has the advantage that the mass of the weight element can easily be adjusted by the amount of liquid filled into the container. Furthermore, using a weight element which is or comprises a container has the advantage that the water can be removed from the container prior to a transport of the weight element for reducing the transport capacity needed for the assembly of a wind turbine rotor.

An attachment arrangement according to the invention comprises a wind turbine blade and an attachment tool according to the invention, which is attached or attachable to the wind turbine blade.

Depending on the embodiment of the attachment tool, the blade may comprise a plurality of elements protruding from its circumference in a root-side end portion of the blade. The protruding elements can be for instance bushings with a protruding section protruding from the outer circumference of the root-side section of the blade. The bushings can be for instance used to fix bolts or screws that protrude from the root-side end in an axial direction of the blade used for attaching the blade to the hub of the wind turbine. It is also possible that the wind turbine blade comprises a flat surface without protruding elements in its root-side end portion, wherein the attachment tool comprises a clamping unit with a movable second portion pivotably hinged to a fixed first portion of the clamping unit encompassing the entire circumference of the root-side end portion of the blade.

A method for fixing a wind turbine blade according to the invention uses an attachment tool according to the invention, wherein the attachment tool is coupled to the blade and a crane hook of a crane is coupled to the attachment tool, wherein the blade is lifted by the crane, wherein the boom protrudes from the main portion beyond the root-side end and the weight element is attached to the second end of the boom, or wherein the boom protrudes from the main portion towards a tip-side end of the blade and the weight element is attached to the attachment portion.

In the first configuration, wherein the boom protrudes from the main portion beyond the root-side end of the blade and the weight element is attached to the second end of the boom, the crane hook can be attached to a second fixation means of the attachment tool arranged on the attachment portion, in particular on a side opposite the first end of the boom. In this first configuration of the attachment tool, the center of gravity of the blade and the attachment tool can be shifted in such manner that the blade orients itself according to the 12-o'clock position, since the weight element attached to the second end of the boom causes a turning of the blade during lifting, so that the root-side end of the blade is oriented towards the 12-o'clock position on the hub. After lifting the blade above the hub, the blade can be connected to the hub without an additional aligning of the blade since it is already oriented correctly for mounting in the 12-o'clock position.

In the second configuration, wherein the boom protrudes from the main portion towards the tip-side end of the blade and the weight element is attached to the attachment portion, the center of gravity of the arrangement comprising the attachment tool and the blade can be changed in such manner that the root-side end of the blade orients itself towards the 4-o'clock position or the 8-o'clock position, respectively. The angle under which the blade has to orient towards the hub is equal for the 4-o'clock and the 8-o'clock position, only the orientation of the blade towards the wind turbine has to be changed. This can occur for instance by grabbing differently oriented blades on the ground for mounting them on the 4-o'clock or the 8-o'clock position, respectively.

In the second configuration, the crane hook can be attached to a second fixation means which is attached to the second end of the boom. While lifting the arrangement, the boom works as a lever allowing for a turning of the turbine blade during lifting and therefore for a self-orientation of the blades depending on the position of the center of gravity of the arrangement comprising the attachment tool and the blade.

In both configurations, the position of the center of gravity and therefore the orientation of the lifted blade, hence of a blade which has no ground contact anymore, can be adjusted by the length of the boom and/or by the mass of the weight element. Additionally, if an attachment tool is used, which allows the adaption of an angle between the attachment portion and the main portion, also an adaption of the angle between the boom and the main portion or the boom and the lifted blade, respectively, is possible to adjust the position of the center of gravity of the entire arrangement or the orientation of the blade, respectively. By adjusting the center of gravity, the orientation of the lifted blade towards the hub of the tower can be determined. Besides the orientation towards the 12-o'clock position or the 4-o'clock, or 8-o'clock position, respectively, any other orientation of the blade towards the hub can be obtained, so that the blade can be mounted for instance in a 4-o'clock or 5-o'clock positon or any other position around the hub.

Preferably, an attachment tool comprising at least one actuator to adjust the angle between the attachment portion and the main portion is used, wherein the angle is adjusted in dependence of a wind induced movement and or a wind induced deflection of the lifted blade. Therefore, the actuator can for instance be coupled to an external control unit or to a control unit of the attachment tool, respectively. The actuation of the actuator can occur in dependence of a wind induced movement or a wind induced deflection of the lifted blade for correcting the orientation of the lifted blade once it approaches the hub of the wind turbine blade. For instance, the control unit controlling the actuation of the at least one actuator can comprise or be connected to a wind sensor of the attachment tool, so that the at least one actuator can be controlled in dependence of a wind induced movement and/or a wind induced deflection of the lifted blade.

All advantages and features described in relation to the attachment tool according to the invention apply correspondingly for both the attachment arrangement and the method for lifting a wind turbine blade according to the invention.

Additional advantages and details of the invention become evident from the embodiments discussed below as well as from the figures. The figures are schematical and show:
- Fig. 1: a wind turbine assembly situation,
- Fig, 2: a first embodiment of an attachment tool according to the invention,
- Fig. 3: a detailed view on a first embodiment of a clamping unit of an attachment tool according to the invention,
- Fig. 4: a detailed view on a second embodiment of a clamping unit of an attachment tool according to the invention,
- Fig. 5: a side view of an attachment arrangement according to the invention comprising a wind turbine blade and the first embodiment of an attachment tool according to the invention,
- Fig. 6: the orientation of the attachment arrangement of fig. 5 after lifting the blade,
- Fig. 7: an attachment arrangement comprising a wind turbine blade and a second embodiment of an attachment tool according to the invention, and
- Fig. 8: the orientation of the attachment arrangement of fig. 7 after lifting the blade.

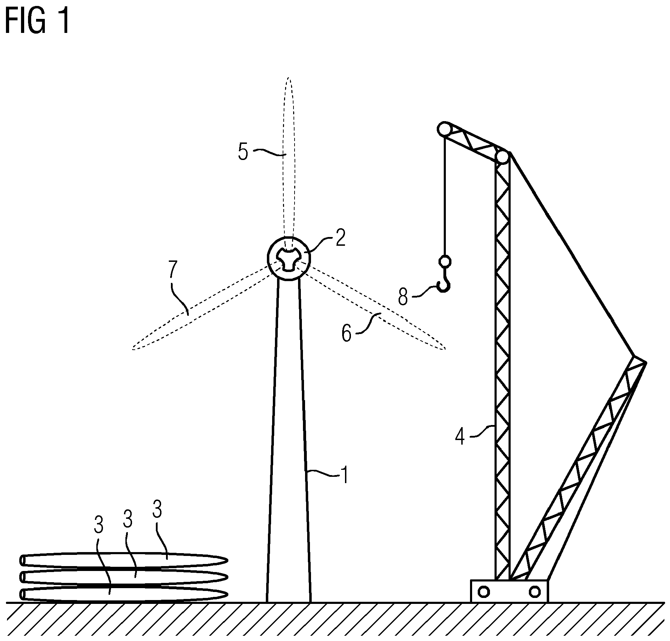

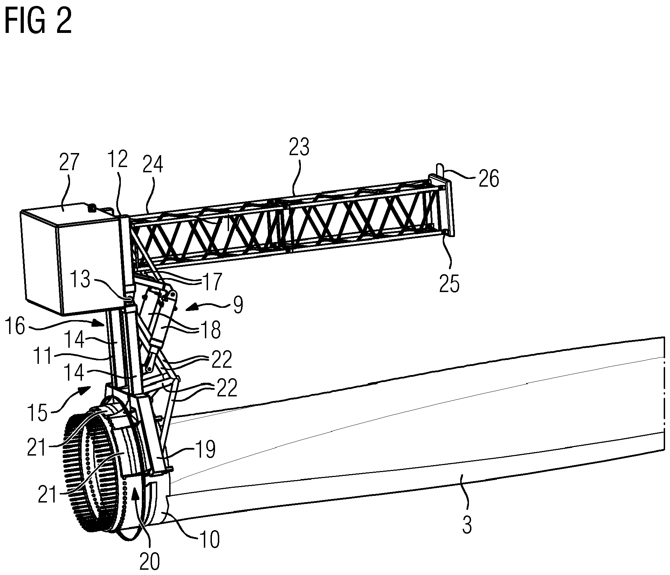

Fig. 1 schematically depicts a constructing situation of a wind turbine 1. The wind turbine 1 comprises a hub 2 to which three wind turbine blades 3 shall be mounted using a crane 4. One of the blades 3 shall be mounted in the 12-o'clock position 5, wherein the other two wind turbine blades 3 shall be mounted in the 4-o'clock position 6 and the 8-o'clock position 7. The position of the wind turbine blades 3 in the 12-o'clock position 5 as well as in the 4-o'clock position 6 and the 8-o'clock position 7 is schematically depicted by the dashed lines. The crane 4 is depicted schematically as a vehicle-based crane stationed in the vicinity of the wind turbine 1. Besides a vehicle-based crane, also a vessel-based crane, for instance on a jack-up vessel, can be used. The crane 4 comprises a crane hook 8 for lifting the wind turbine blades 3 to a height level corresponding to the hub 2 of the wind turbine 1. The coupling of the crane hook 8 to each of the wind turbine blades 3 occurs using an attachment tool as it is depicted for instance in fig. 2.

In fig. 2, a first embodiment of an attachment tool 9 is shown. The attachment tool 9 is attached to a root-side end portion 10 of the blade 3. The attachment tool 9 comprises a main portion 11 and an attachment portion 12, which is pivotably hinged to the main portion 11 using the hinges 13. The main portion 11 is constructed as a main frame and comprises two side struts 14, which extend from a lower portion 15 of the main portion 11 towards an upper portion 16 of the main portion 11. Each of the side struts 14 is coupled to one of the hinges 13, wherein the hinges 13 are coupled to the attachment portion 12, which is also realized as an attachment frame.

Between each of the side struts 14 an actuator 18 is coupled to a lever strut 17 protruding from the attachment portion 12. In this embodiment, the actuator 18 is a hydraulic actuator. Alternatively, one or both of the actuators 18 can be pneumatic actuators and/or electrical actuators, respectively. By actuation of the actuators 18, an angle between the attachment portion 12 and the main portion 13 of the attachment tool 9 can be adjusted.

The main portion 9 comprises an edge 19 abutting the side struts 14 at the lower portion 15 of the main portion 11. The edge 19 partly encompasses a circumference of the root-side end portion 10 of the wind turbine blade 3. To the edge 19, a fixation means 20 comprising three clamping units 21 is attached. The main portion 11 is attached by the first fixation means 20 to the root-side end portion 10 of the blade 3. The main portion 11 of the attachment tool 9 protrudes towards a side of the wind turbine blade 3. The attachment tool 9 comprises a plurality of supporting struts 22, which are arranged in between the side struts 14, the lever struts 17 and the edge 19.

To the attachment portion 12 of the attachment tool 9, a boom 23 is attached with its first end 24, so that the boom 23 protrudes from the main portion 11 in an angle smaller than 180°. On a second end 25 of the boom 23, which is opposing the first end 24 of the boom 23, a second fixation means 26 is attached. The second fixation means 26 comprises a loop, wherein the loop is adapted to be coupled to the crane hook 8 of the crane 4.

On an opposing side of the attachment portion 12, a weight element 27 is attached to the attachment portion 12. The weight element 27 can be for instance a solid object, like a concrete weight element, or the weight element 27 can be or comprise a container which is fillable with a liquid to adjust the mass of the weight element 27. It is in particular possible, that the weight element 27 comprises a mass or a weight, respectively, which exceeds the mass or the weight of the wind turbine blade 3.

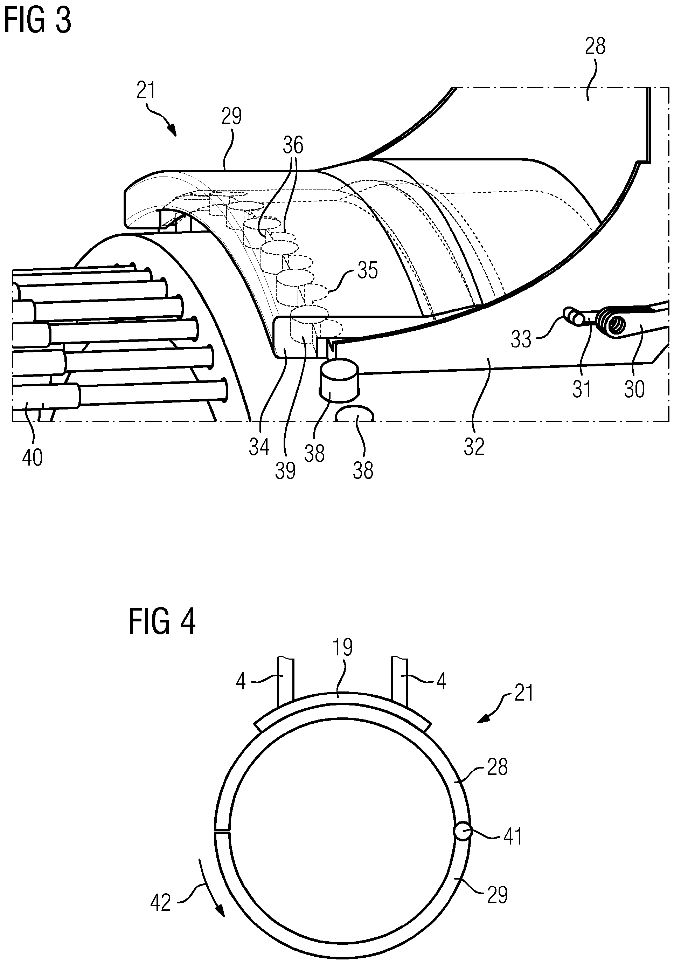

In fig. 3, a detailed view on a clamping unit 21 is shown. The clamping unit 21 comprises a first portion 28, which is fixed to the edge 19 of the main portion 11. Furthermore, the clamping unit 21 comprises a second portion 29, which is movable relative to the first portion 28. For sake of comprehensibility, the second portion 29 is shown as transparent. The second portion 29 can be moved using two actuators 30, which are coupled to the second portion 29 and either the first portion 28 or the main portion 11, respectively. The second portion 29 of the clamping unit 21 is guided in slits 31 of side walls of the first portion 28 protruding from the circumferentially spaced edges 32 of the first portion 28. For guiding in the slits 31, the second portion 29 comprises a side protrusion 33 corresponding with the slits 31.

The first portion 28 of the clamping unit 21 comprises a curvature corresponding to the curvature of the outer circumference of the wind turbine blade 3 in the root-side end portion 10, so that the first portion 28 smoothly abuts the outer circumference of the blade 3. The second portion 29 of the clamping unit 21 is arranged on top of the first portion 28, wherein the curvature and the geometry of the second portion 29 is adapted to fit to the curvature and the geometry of the first portion 28, so that the second portion 29 smoothly abuts the first portion 28 in a closed state of the clamping unit 21.

The second portion 29 of the clamping unit 21 comprises an projection 34, which overlaps an edge 35 of the first portion 28. Both the projection 34 and the edge 35 comprise a toothed profile 36. When the clamping unit 21 is moved in its closed position using the actuators 30, the projection 34 of the second portion 29 is pulled towards the edge 35 of the first portion 28. The second portion 29 abuts the first portion 28 only in a closed state of the clamping unit 21, wherein in an open state of the clamping unit 21, the edge projection 34 is lifted above the edge 35 of the first portion 28, so that the clamping unit 21 or the attachment tool 9, respectively, can be moved towards the protruding elements 38 of the wind turbine blade 3. The lifting can occur using a correspondingly shaped slit 31.

The protruding elements 38 can be for instance bolts or bushings, which protrude from the circumference of the wind turbine blade 3. By closing the clamping unit 21, the protruding elements 38 are clamped in between the toothed profiles 36 of both the projection 34 and the edge 35. Therefore, the toothed profiles 36 encompass a plurality of openings 39 in a closed state of the clamp unit 21, wherein the shape of the openings 39 corresponds to the shape of the protruding elements 38. By using three clamping units 21, as it is discernable from fig. 2, a plurality of protruding elements 38 are clamped in between the three clamping units 21. Since the clamping units 21 each encompass the circumference of the wind turbine blade 3 in the root-side end portion 10 around approximately 140°, the wind turbine blade 3 is fixed immovably to the attachment tool 9 once the clamping units 21 have been closed.

Due to a slight tilting of the wind turbine blade 3 during the lifting, and therefore due to the tilting of the protruding elements 38 in between the first portion 28 and the second portion 29 of the clamping unit 21, a stable and secure fixation of the wind turbine blade 3 to the attachment tool 9 can be obtained. It is possible that each clamping unit 21 comprises a locking means (not depicted) which locks the second portion 29 on the first portion 28 in a closed state of the clamping unit 21 to prevent an unintended opening of the clamping unit 21 in case of failure of one or more of the actuators 30.

The protruding elements 38 can be for instance bushings, which are used to fix bolts 40 protruding from the root-side end of the wind turbine blade 3. Alternatively, the protruding elements can be bolts arranged circumferentially around the root-side end portion 10 of the blade. The bolts 40 can be adapted to fixate the wind turbine blade 3 to the hub 2 of the wind turbine 1.

In fig. 4, a second embodiment of the clamping unit 21 is shown. In this embodiment, the first portion 28 is adapted to encompass a segment of the circumference of the wind turbine blade 3 of approximately 180°. The second portion 29 is pivotably hinged to the first portion 28 by the hinge 41. It is possible that an actuator (not shown) is arranged in between the first portion 28 and the second portion 29, wherein by an actuation of the actuator the second portion 29 can be moved relatively to the first portion 28 so that the clamping unit 21 can be moved between an open state and the closed state using the actuator. In this embodiment, the first portion 28 embracing a large segment of the wind turbine blade 3 is attached to the lower edge 19 of the main portion 9, wherein the edge 19 is attached to the side struts 4. In fig. 4, the clamping unit 21 is depicted in a closed state. An open state of the clamping unit 21 can be obtained by pivoting the second portion 29 in direction of the arrow 42. The clamping unit 21 enables the fixation of the attachment tool 9 to wind turbine blades 3 which do not comprise protruding elements 38 from their surface.

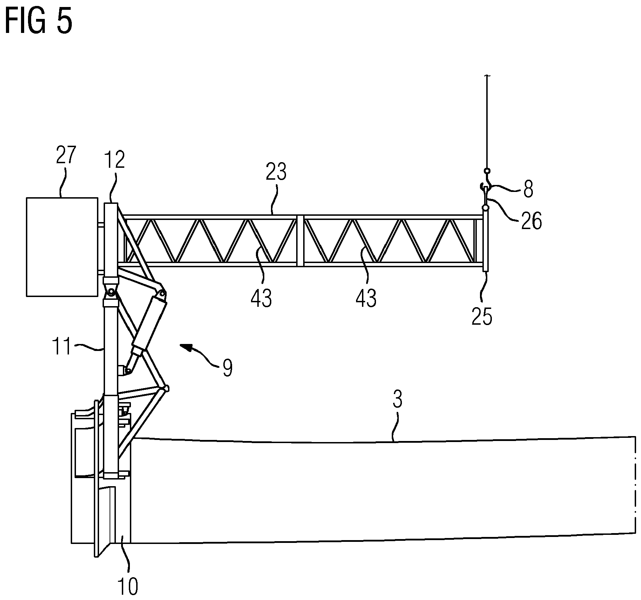

In fig. 5, a side view on an attachment arrangement 47 comprising the first embodiment of the attachment tool 9 attached to the root-side end portion 10 of the wind turbine blade 3 is shown. The crane hook 8 is coupled to the second fixation means 26 attached to the second edge 25 of the boom 23. As it is discernible, the boom 23 comprises two boom segments 43 which are attached to each other forming the boom 23. The weight element 27 is attached to the attachment portion 12 of the attachment tool 9 on a side opposing the boom 23. The boom 23 protrudes from the attachment portion 12 towards a tip side end of the wind turbine blade 3. The weight element 27 extends from the attachment portion 12 towards the root-side end of the blade 3. Depending on the mass of the weight element 27 as well as on the length of the boom 9, the center of gravity of the attachment arrangement comprising the attachment tool 9 and the wind turbine blade 3 can be changed. Additionally, it is possible that by the actuator 18 coupled between the attachment portion 12 and the main portion 11, the angle between the attachment portion 12 and the main portion 11 and therefore between the boom 23 and the blade 3 can be adjusted to influence the position of the center of gravity of the attachment arrangement 47.

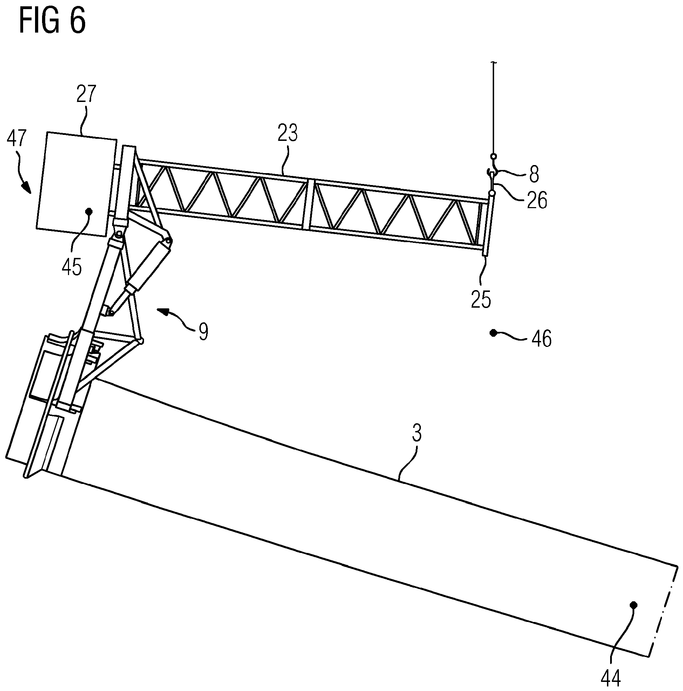

The center of gravity is schematically depicted in fig. 6. Point 44 represents the center of gravity of the blade 3. Correspondingly, point 45 symbolizes the center of gravity of the attachment tool 9 with all its components. Point 46 symbolizes the center of gravity of the attachment arrangement 47 comprising both the attachment tool 9 and the wind turbine blade 3. The attachment of the crane hook 8 to the second fixation means 26 on the second end 25 of the boom 23 allows a rotation of the wind turbine blade 3 around the center of gravity according to point 46 once the blade 3 has been lifted by the crane 4. Depending on the position of the center of gravity of the attachment arrangement 47, the blade 3 orients under a specific angle towards the hub 2. In this embodiment, the wind turbine blade 3 orients itself under an angle corresponding to the 4-o'clock or the 8-o'clock position, respectively. For both the 4-o'clock and the 8-o'clock position, the angle between the wind turbine blade 3 and the hub 2 is the same, so that the wind turbine blade for the 4-o'clock and the 8-o'clock position can be lifted using the depicted embodiment of the attachment tool 9, only the orientation of the root-side end portion 10 of the wind turbine blade 3 towards the hub 2 prior or during the lifting of the wind turbine blade 3 has to be adjusted.

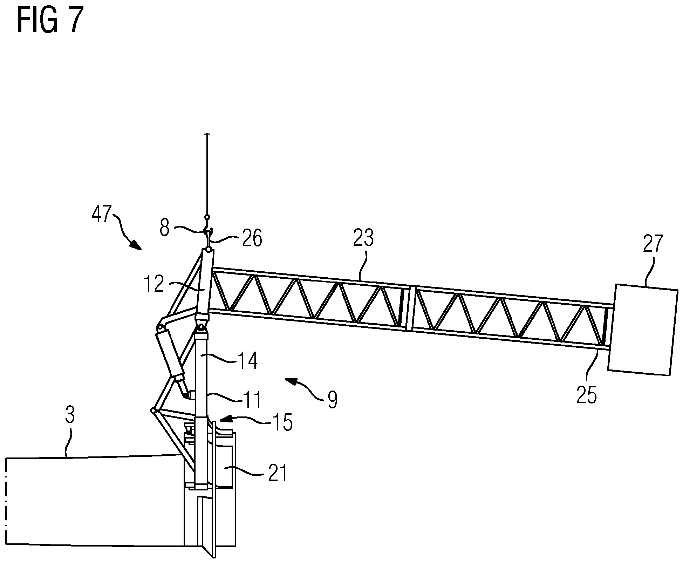

In fig. 7, a second embodiment of an attachment tool 9 is shown. The second embodiment comprises the same elements as the first embodiment previously discussed. The second embodiment differs from the first embodiment in the position of the boom 23, which is attached to the attachment portion 12 so that the boom protrudes beyond the root-side end of the blade 3. Additionally, the weight element 27 is attached to the second end 25 of the boom 23. The second fixation means 26 is attached to the attachment portion 12. Compared to the first embodiment, the boom 23 is longer. This can be achieved for instance by using a boom 23 which comprises more than two boom segments 43 or by a boom 23 that comprises at least one extendable telescope section. The angle between the attachment portion 12 and the main portion 11, and therefore between the boom 23 and the blade 3, can be adjusted using the actuators 18.

Preferably, the second embodiment of the attachment tool 9 can be obtained from the first embodiment by changing the position of the boom 23, the weight element 27 and the second fixation means 26. This can for instance be obtained by a detachable attachment of the boom 23, the weight 27 and the second fixation means 26, so that the attachment tool 9 can be configured in a first configuration corresponding to the first embodiment or a second configuration corresponding to the second embodiment. The second embodiment or the second configuration, respectively, which is depicted in fig. 7, is used to lift the wind turbine blade 3 in the 12-o'clock position 5.

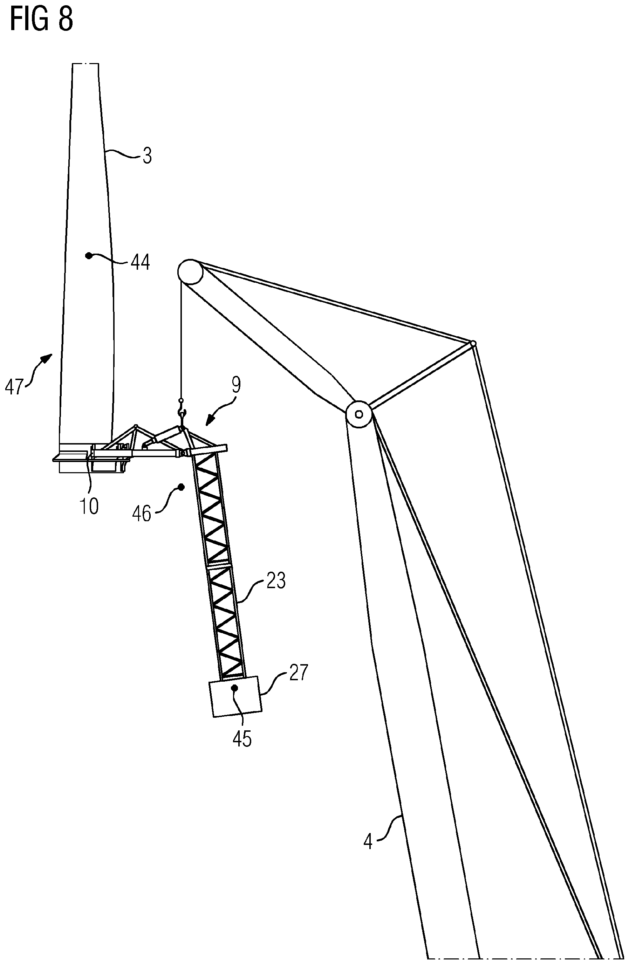

In fig. 8, the orientation of the wind turbine blade 3 attached to attachment tool 9 according to the second configuration is shown. The attachment arrangement 47 comprising the wind turbine blade 3 and the attachment tool 9 is lifted by the crane 4, wherein the wind turbine blade 3 orients with its root-side end portion 10 to a downward position. Corresponding to fig. 6, the center of gravity of the blade 3 is depicted by point 44, the center of gravity of the attachment tool 9 is depicted by point 45 and the center of gravity of the attachment arrangement 47 comprising both the blade 3 and the attachment tool 9 is depicted by point 46. The self-orientation of the blade 3 is obtained due to the mass of the weight element 27 acting on the boom 23 as a lever, so that the entire arrangement turns according to fig. 8.

As it is discernible, the crane 4 must only be able to lift the attachment arrangement 47 to approximately the same level as the hub 2, since nearly the entire blade 3 is above the second fixation means 26. This facilitates the assembly of the wind turbine blade 1, since a smaller crane can be used for the assembly of the wind turbine 1.

Although the weight element 27 is much smaller than the blade 3, it shall be noted that the mass of the weight element 27 can exceed the mass of the wind turbine blade 3. This can for instance be obtained using a solid weight element 27 or a weight element 27 which is fillable with a liquid like water, so that the mass of the weight element 27 may exceed the mass of the wind turbine blade 3, which may be fabricated from light-weight components.

An embodiment of a method for lifting the wind turbine blade 3 may comprise the steps of attaching the attachment tool 9 to the wind turbine blade 3 in either a first configuration or a second configuration as previously described in relation to figs. 5 and 6 or 7 and 8, respectively. In the first configuration, wherein the boom 23 protrudes from the main portion 9 beyond the root-side end of the blade 3 and wherein the weight element 27 is attached to the second end 25 of the boom 23, the wind turbine blade 3 can be lifted to the 12-o'clock position. It is possible that the hub 2 is fixed stationary prior to lifting of the blade so that a turning of the hub 2 is prevented once a blade 3 has been mounted to the 12-o'clock position 5.

A lifting of a blade to the 4-o'clock position or the 8-o'clock position, respectively, is possible with the second configuration of the attachment tool 9, wherein the boom 23 protrudes from the main portion 9 towards a tip side end of the blade 3 and the weight element 27 is attached to the attachment portion 12.

It is possible that during the lifting, the actuators 18 are actuated, wherein the angle between the attachment portion 12 and the main portion 11 is adjusted in dependence of a wind induced movement and/or a wind induced deflection of a lifted blade 3. Therefore, the attachment tool 9 may comprise one or more sensors for detecting a wind induced movement and/or a wind induced deflection of the lifted blade. The sensors and actuators may be connected with a control unit of the attachment tool 9 and/or to an external control unit, which controls the actuator 18 during the lifting procedure.

Corresponding to the previously described lifting process, the attachment tool 9 can also be used for removing a wind turbine blade, which is already attached to a wind turbine blade 1 using the crane 4. In this case, the attachment tool 9 can be lifted towards the wind turbine blade 3 on top of the wind turbine 1, wherein the configuration of the attachment tool 9 corresponds to the position of the blade 3 which shall be removed. Furthermore, each clamping unit 21 can comprise a sensor connected to the control unit so that the state of the clamping units 21 can be surveilled during lifting.

Although the present invention has been described in detail with reference to the preferred embodiment, the present invention is not limited by the disclosed examples from which the skilled person is able to derive other variations without departing from the scope of the invention.

## Claims

1. Attachment tool for connecting a crane hook (8) to a wind turbine blade (3), comprising a main portion (11), wherein the main portion (11) comprises a lower portion (15) with a first fixation means (20) fixable to a root-side end portion (10) of the blade (3) so that the main portion (11) protrudes to the side of the blade (3), wherein an attachment portion (12) is attached to an upper portion (16) of the main portion (11), wherein a first end (24) of a boom (23) is attached to the attachment portion (12), so that the boom (23) is protruding from the main portion (11) in an angle smaller than 180°, wherein at least one second fixation means (26) is attached to the attachment portion (12) and/or a second end (25) of the boom (23) opposite the attachment portion (12), wherein a weight element (27) is attached to the attachment portion (12) or to the second end (25) of the boom (23).

2. Attachment tool according to claim 1, **characterized in that** the boom (23) comprises a plurality of boom segments (43), which are detachably attached to each other, and/or that the boom (23) comprises at least one extendable telescope portion.

3. Attachment tool according to claim 1 or 2, **characterized in that** the attachment portion (12) is pivotably hinged to the main portion (11).

4. Attachment tool according to claim 3, **characterized in that** it comprises at least one actuator (18), in particular a hydraulic actuator or a pneumatic actuator or an electrical actuator, wherein the angle between the attachment portion (12) and the main portion (11) is adjustable by actuation of the actuator (18).

5. Attachment tool according to one of the preceding claims, **characterized in that** the main portion (11) comprises two side struts (14) extending between the lower portion (15) of the main portion (11) to the upper portion (16) of the main portion (11), wherein the side struts (14) are supported against each other by at least one supporting strut (22).

6. Attachment tool according to claim 4 and 5, **characterized in that** it comprises two actuators (18), wherein each actuator (18) is attached to a lever strut (17) protruding from the attachment portion (12).

7. Attachment tool according one of the preceding claims, **characterized in that** the lower portion (15) of the main portion (11) comprises an edge (19) adapted to encompass a segment of a circumference, in particular a segment between 90° and 180°, of a root-side end portion (10) of a wind turbine blade (3).

8. Attachment tool according one of the preceding claims, **characterized in that** the first fixation means (20) comprises at least one clamping unit (21), wherein the clamping unit (21) comprises a curved first portion (28) fixed to the main portion (11) and a curved second portion (29) relatively movable to the first portion (28) between an open position and a closed position of the clamping unit (21).

9. Attachment tool according to claim 8, **characterized in that** the second portion (29) is pivotably hinged to the first portion (28), wherein the first portion (28) and the second portion (29) are adapted to encompass the entire circumference of the root-side end portion (10) of the blade (3) in a closed state of the clamping unit (21).

10. Attachment tool according to claim 8, **characterized in that** the first portion (28) is adapted to encompass a segment of the circumference of the root-side end portion (10) of the blade (3), wherein the second portion (29) is arranged on the first portion (28) and encompasses the first portion (28) at least partly, wherein the second portion (29) comprises a projection (34) overlapping an edge (35) of the first portion (28).

11. Attachment tool according to claim 10, **characterized in that** the edge (35) of the first portion (28) and the projection (34) of the second portion each comprise a toothed profile (36), wherein the toothed profiles (36) encompass a plurality of openings in a closed state of the clamping unit (21).

12. Attachment tool according to one of the claims 8 to 11, **characterized in that** the clamping unit (21) comprises at least one actuator (30), in particular a hydraulic actuator or a pneumatic actuator or an electrical actuator, to move the second portion (28) between an open position and a closed position of the clamping unit (21) and/or that the clamping unit (21) comprises a locking means for locking the clamping unit (21) in a closed position.

13. Attachment tool according to one of the preceding claims, **characterized in that** the clamping unit (21) comprises at least one sensor to detect the current position of the clamping unit (21).

14. Attachment tool according to one of the preceding claims, **characterized in that** the boom (23) is detachably attached to the attachment portion (12) and/or that the weight element (27) is detachably attached to the attachment portion (12) or to the boom (23).

15. Attachment tool according to one of the preceding claims, characterized the weight element (27) is a solid body or that the weight element (27) is or comprises a container fillable with a liquid.

16. Attachment arrangement comprising a wind turbine blade (3) and an attachment tool (9) according to one of the preceding claims attached or attachable to the wind turbine blade (3).

17. Method for lifting a wind turbine blade (3), wherein an attachment tool (9) according to one of the preceding claims is used, wherein the attachment tool (9) is coupled to the blade (3) and a crane hook (8) of a crane (4) is coupled to the attachment tool (9), wherein the blade (3) is lifted by the crane (4),
wherein the boom (23) protrudes from the main portion (11) beyond the root-side end and the weight element (27) is attached to the second end (25) of the boom, or wherein the boom (23) protrudes from the main portion (11) towards a tip-side end of the blade (3) and the weight element (27) is attached to the attachment portion (12).

18. Method according to claim 17, wherein an attachment tool (9) comprising at least one actuator (18) to adjust the angle between the attachment portion (12) and the main portion (11) is used, wherein the angle is adjusted in dependence of a wind-induced movement and/or a wind-induced deflection of the lifted blade (3).
